(19) **Europäisches Patentamt / European Patent Office / Office européen des brevets**

(11) **EP 3 196 906 B1**

(12) **EUROPEAN PATENT SPECIFICATION**

(45) Date of publication and mention
of the grant of the patent:
**06.09.2023 Bulletin 2023/36**

(51) International Patent Classification (IPC):
**H01G 11/74** *(2013.01)*     **H01G 11/82** *(2013.01)*
**H01M 10/04** *(2006.01)*     **H01M 10/0587** *(2010.01)*

(21) Application number: **16152106.7**

(22) Date of filing: **20.01.2016**

(52) Cooperative Patent Classification (CPC):
**H01G 11/74; H01G 11/82; H01M 10/0431;**
**H01M 50/179; H01M 50/538;** H01M 10/0587;
Y02E 60/10; Y02T 10/70

(54) **ELECTRIC DOUBLE LAYER DEVICE**

ELEKTRISCHE DOPPELSCHICHTVORRICHTUNG

DISPOSITIF À DOUBLE COUCHE ÉLECTRIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**26.07.2017 Bulletin 2017/30**

(73) Proprietor: **Maxwell Technologies Korea Co., Ltd.**
**Yongin-si, Gyeonggi-do 17102 (KR)**

(72) Inventors:
• **KIM, Young Jin**
**Yongin-si, Gyeonggi-do 16950 (KR)**

• **JUNG, Gwan Goo**
**Gyeonggi-do 18110 (KR)**

(74) Representative: **HGF**
**HGF Limited**
**1 City Walk**
**Leeds LS11 9DX (GB)**

(56) References cited:
**EP-A1- 1 688 975**

## Description

BACKGROUND OF THE INVENTION

Field of the Invention

The present invention relates to an electric double layer device, and more particularly to an electric double layer device configured such that a lower terminal is directly withdrawn from a lower collecting plate in the same manner as the manner in which an upper terminal is directly withdrawn from an upper collecting plate, thereby improving productivity and ease of assembly, increasing connection force, and improving discharge efficiency during the discharge of high current while reducing internal equivalent resistance.

Description of the Related Art

In general, an electric double layer device is a device such as a battery, a capacitor, or an electrolytic condenser, which stores electrical energy. The electric double layer device is electrically charged and discharged using electrodes that are electrically conductive. Electric double layer devices are used in cellular phones, GPS receivers, MP3 players, and backup memories. In addition, electric double layer devices are used in wind energy systems, solar energy systems, and motors of electric vehicles and hybrid electric vehicles.

An electric double layer is a layer configured such that positive charges are successively positioned on one surface of a thin film layer of an object and negative charges are successively positioned on the other surface of the thin film layer or such that both surfaces of the thin film layer have the same surface density. The electric double layer is typically a double layer that includes electric dipoles. In general, charges are rearranged at the interface between different materials, whereby an electric double layer is formed.

Positive ions or negative ions in a liquid-state aqueous electrolytic solution are selectively adsorbed at the interface between a solid-state electrode and a liquid-state aqueous electrolytic solution, solid surface molecules are dissociated, or the positive ions or the negative ions are adsorbed on the dipole interface, whereby an electric double layer is formed. This layer is referred to as a Helmholtz layer.

Such an electric double layer is closely related to various electrochemical surface phenomena, such as an electrode reaction, an electrokinetic phenomenon (an electrophoretic phenomenon), and the stability of colloids.

One example of such an electric double layer device may be a capacitor.

In the electric double layer capacitor, an electrostatic layer is formed at the interface between an activated carbon electrode and an organic electrolyte, and an electric double layer state is used as the function of a dielectric to accumulate electricity in the same manner as in a battery.

In particular, charges that accumulate in an electric double layer, formed between a solid electrode and a solid-state or liquid-state electrolyte, are used.

The capacitor has lower energy density than the battery. However, the capacitor is superior to the battery in terms of power density, that is, instantaneous high output. In addition, the capacitor is usable hundreds of thousands of times. That is, the lifespan of the capacitor is semipermanent. For these reasons, capacitors are used in various fields.

The electric double layer capacitor is operated according to the following principle. When direct current voltage is applied to a pair of solid electrodes in a state in which the solid electrodes are placed in an electrolyte ion solution, negative ions are electrostatically drawn to an electrode polarized as a positive electrode, and positive ions are electrostatically drawn to an electrode polarized as a negative electrode. As a result, an electric double layer is formed at the interface between each electrode and the electrolyte. In particular, activated carbon has a plurality of pores. For this reason, the electric double layer is easily formed. The capacitance of the stored charge may be calculated using Equation 1 below.

[Equation 1]

$$C = \frac{\varepsilon_0 \varepsilon}{4\pi\sigma} \int ds$$

Where $\varepsilon_0$ indicates the permittivity of air, $\varepsilon$ indicates the permittivity of an electrolyte, o indicates the radius of electrolytic ions, and S indicates the specific surface area of an electrode.

The factors that determine the capacity of an electric double layer capacitor are as follows. As can be seen from Equation 1 above, the larger the specific surface area of the electrode, the larger the permittivity of the electrolyte, and the smaller the radius of the ions during the formation of the double layer, the greater the capacity that can be obtained. In addition, capacitance is determined by the internal resistance of the electrode, the relationship between the distribution of pores in the electrode and the electrolytic ions, internal voltage, etc.

The electric double layer capacitor includes electrodes, a separator, an electrolyte, current collectors, and a case.

The selection of materials for the electrodes is most important when configuring the capacitor. However, the capacitance of the capacitor is changed by various other components of the capacitor.

The materials for the electrodes must have high electrical conductivity and a large specific surface area. In addition, the materials for the electrodes must be electrochemically stable.

Another example of such an electric double layer device may be a battery.

The battery is a device that converts chemical energy, stored in a chemical material (i.e. an active material) contained therein, into electrical energy through an electrochemical oxidation-reduction reaction (redox reaction).

The battery is constituted by an assembly of two or more electrochemical cells. Alternatively, the battery may be constituted by a single cell. The battery is configured such that electrons flow to the outside along a conducting wire due to an electrochemical reaction, rather than a chemical reaction. The electrons flowing along the conducting wire becomes the source of electrical energy, thereby being electrically useful.

More specifically, the battery has a positive electrode (cathode) active material and a negative electrode (anode) active material coated on a current collector. The positive electrode and the negative electrode are separated from each other by a separator. In addition, the positive electrode and the negative electrode are contained in an electrolyte, which enables the transfer of ions between the two electrodes.

In order to operate an electric lamp, an apparatus, an instrument, etc., the electrode materials and electrolyte must be selected appropriately and arranged so as to have a specific structure such that sufficient voltage and current are generated between the two electrodes of the battery.

For example, a positive electrode, the positive electrode active material of which is reduced by electrons received from an external conducting wire, a negative electrode, the negative electrode active material of which is oxidized so as to emit electrons to the conducting wire, an electrolyte, which enables a material to move such that the reduction reaction of the positive electrode and the oxidation reaction of the negative electrode are chemically harmonious, and a separator, which prevents physical contact between the positive electrode and the negative electrode, must be arranged so as to convert chemical energy into electrical energy based on interactions therebetween.

The negative electrode of the battery, arranged as described above, basically emits electrons while being oxidized, and the positive electrode receives electrons while being reduced (together with positive ions). When the battery is operated in a state of being connected to an external load, therefore, the two electrodes are electrochemically changed to thus perform electrical work.

At this time, the electrons, which are generated by the oxidation reaction of the negative electrode, move to the positive electrode via the external load, and undergo a reduction reaction with the positive electrode active material. Consequently, the flow of charges is completed as the result of movement of anions (negative ions) and cations (positive ions) toward the negative electrode and the positive electrode in the electrolyte.

In this way, the reaction is performed in the electrolyte such that charges continuously flow in the external conducting wire, and the electrical operation is performed using the charges.

Based on the kind of an electrolytic solution, the battery may be classified as a liquid electrolyte battery or a polymer electrolyte battery. In general, the liquid electrolyte battery is referred to as a lithium ion battery, and the polymer electrolyte battery is referred to as a lithium polymer battery.

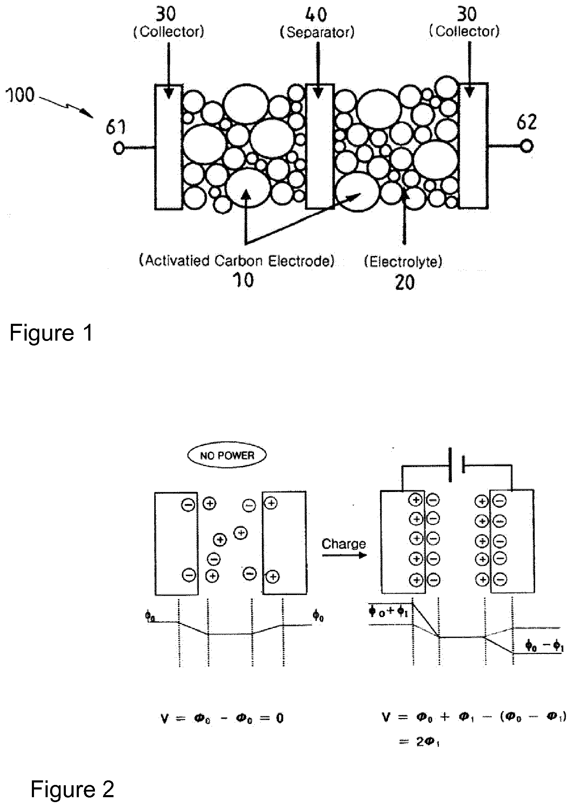

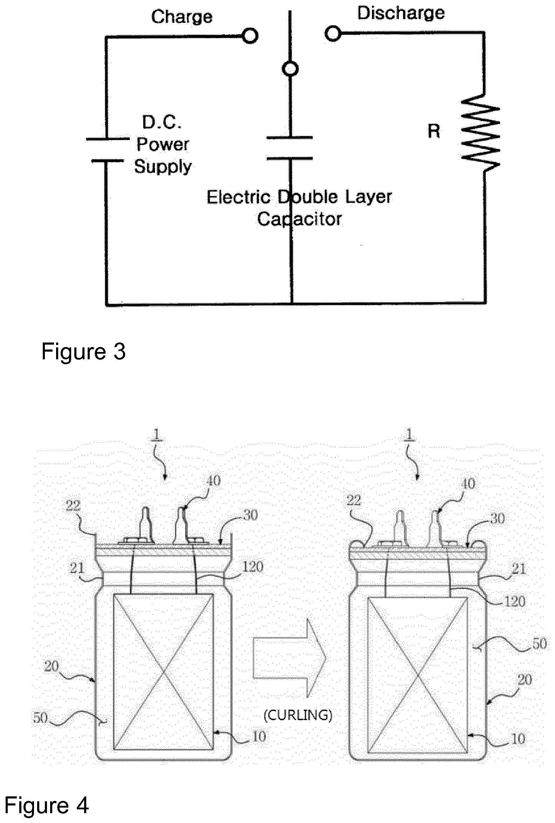

FIG. 1 is a schematic view showing the structure of a general electric double layer device, FIG. 2 is a schematic view illustrating a principle whereby an electric double layer capacitor, applied to a general electric double layer device, is charged, and FIG. 3 is a circuit diagram illustrating a principle whereby the electric double layer capacitor applied to the general electric double layer device is charged and discharged.

As shown in FIG. 1, a general electric double layer device 100 includes electrodes 10, an electrolytic solution 20, current collectors 30, a separator 40, a first lead terminal 61, and a second lead terminal 62.

On the assumption that the electric double layer device 100 is a battery, the chemical energy of a chemical material (i.e. an active material) therein is converted into electrical energy through an electrochemical oxidation-reduction reaction (redox reaction), and the electrodes 10, which are put on the current collectors 30, have a positive electrode and a negative electrode as the active material.

Describing the characteristics of the electric double layer device 100 in more detail based on the assumption that the electric double layer device 100 is a capacitor, on the other hand, energy is stored using the distribution of positive and negative charges which are arranged within a short distance from each other at the interface between the two different electrodes 10, the capacitance, in farads, is high, and the change and deterioration in performance upon repeated charge and discharge cycles thereof are very low.

The electrodes 10 are made of activated carbon, which has a large specific surface area, and store charges generated at the electric double layer, which is disposed at the interface with the electrolytic solution 20. Of the electrical characteristics of the electrodes 10, capacitance and internal resistance are the most important criteria in evaluating the performance thereof. Consequently, the electrodes 10 must exhibit low specific resistance and have a porous structure. In the porous structure, the size and distribution of pores must be simple and biased within a predetermined range. The material characteristics of the electrodes 10 most strongly affect the inherent charge and discharge characteristics of the electric double layer capacitor.

In recent years, therefore, an activated carbon-based material, which has a large specific surface area and is inexpensive, has been mainly used as the material for the electrodes 10, and research into the use of metal oxides and conductive polymers in order to increase energy density has been increasingly conducted.

Meanwhile, an organic solvent, quaternary ammonium salt (organic), or sulfuric acid solution (aqueous solution) is used as the electrolytic solution 20. For the organic solvent electrolytic solution, polycarbonate (PC) and ethyl methyl carbonate (EMC) or PC and dimethoxyethane (DME) may be mixed at a predetermined ratio in order to improve electrical conductivity.

An electric double layer capacitor 100 using an organic electrolytic solution has a capacitance per unit area of 4 to 6 $\mu$F/cm2. The electrical conductivity of the organic electrolytic solution is higher than that of the aqueous electrolytic solution. Consequently, the electric double layer capacitor 100 using the aqueous electrolytic solution has a capacitance per unit area of 5 to 10 $\mu$F/cm2, which is higher than that of the electric double layer capacitor 100 using the organic electrolyte. However, the electric double layer capacitor 100 using the aqueous electrolytic solution has problems in that the potential window is narrow and decomposition occurs.

Nonwoven fabric, porous polyethylene (PE), or polypropylene (PP) film is used as the separator 40.

The principle whereby the electric double layer capacitor is charged is as follows. As shown in FIG. 1, the two electrodes 10 are placed opposite the electrolytic solution 20 in a state in which the separator 40 is located therebetween. In a state in which electrical energy is not supplied from the outside, as shown in FIG. 2, which is a schematic view illustrating the principle whereby the electric double layer capacitor is charged, the electric double layer capacitor is in a bulk state, in which charges are non-uniformly distributed. As a result, the potential difference between the electrodes 10 becomes 0. When electrical energy is supplied from the outside, as shown in FIG. 3, which is a circuit diagram illustrating the principle whereby the electric double layer capacitor is charged and discharged, charges are uniformly distributed throughout the electric double layer capacitor. As a result, as shown in FIG. 2, an energy having voltage corresponding to a potential difference of 2Φ1 is charged between the two electrodes 10.

At this time, even when the supply of electrical energy is interrupted, the electric double layer, which has already been formed, is not extinguished, and therefore the charged electrical energy is retained.

Related Art Document 1 (10-2008-0044054: Module type electric double layer capacitor and method of manufacturing the same)

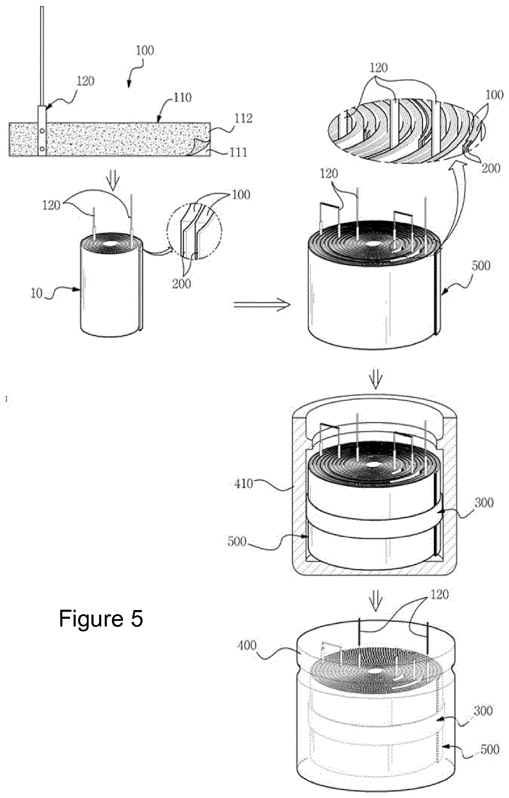

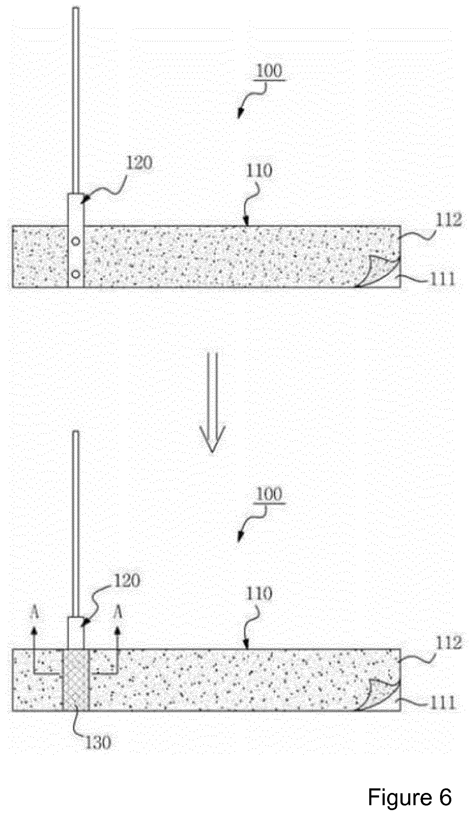

FIG. 4 is a view showing a process of manufacturing an electric double layer capacitor according to Related Art Document 1, FIG. 5 is a view illustrating a method of manufacturing an integrated electric double layer capacitor according to Related Art Document 1, and FIG. 6 is a view illustrating a process of manufacturing an electrode device that constitutes the electric double layer capacitor according to Related Art Document 1.

In general, a secondary battery that can be charged and discharged, for example, an energy storage apparatus, such as an electrolytic condenser or an electrochemical double layer capacitor (EDLC), is configured to have a wound type structure, e.g. a jelly-roll type structure.

As shown in FIG. 4, a wound type energy storage apparatus, such as a wound type electrochemical double layer capacitor, generally includes a cylindrical case 20 made of aluminum (Al) and a wound device 10 mounted in the case 20.

The wound device 10 is formed by winding a strip-shaped electrode stack, that is, positive and negative electrode devices with an electrolyte interposed between the positive and negative electrode devices, in a cylindrical shape and taping the outside of the strip-shaped electrode stack in order to prevent the strip-shaped electrode stack from being unwound.

The wound device 10 formed as described above is impregnated with an electrolytic solution, and is mounted in the cylindrical case 20. A terminal plate 30 is installed above the wound device 10, and lug- or screw-type external terminals 40 are fastened to the terminal plate 30.

In addition, a neck 21, which prevents the terminal plate 30 from being pushed downward, is formed in the upper part of the case 20 in a depressed state. The wound device 10 is mounted in the case 20 after the neck 21 is formed in the case 20. The wound device 10 is electrically connected to the external terminals 40 via terminals 120. Subsequently, an upper end 22 of the case 20 is curled. As a result, the terminal plate 30 is fixed in the case 20, and the assembly process is completed.

Referring to the upper part of FIG. 6, an electrode device 100 includes an electrode current collection sheet 111 made of general aluminum foil and an electrode active material 112 applied to the current collection sheet 111.

The electrode active material 112 is formed by applying conductive paste including mostly activated carbon.

A terminal 120 is coupled to the electrode device 100. Specifically, a portion of the electrode device 100 to which the terminal 120 will be coupled is scratched to remove the electrode active material 112 therefrom, the scratched portion of the electrode device 100 is drilled, and the terminal 120 is coupled to the drilled portion of the electrode device 100 by riveting.

The applicant of the present application has improved the electric double layer device having the above-mentioned characteristics, and proposes the improved electric double layer device as the present invention.

Related Art Document 2 (10-2013-0065485: Electric double layer device and wound unit for the same)

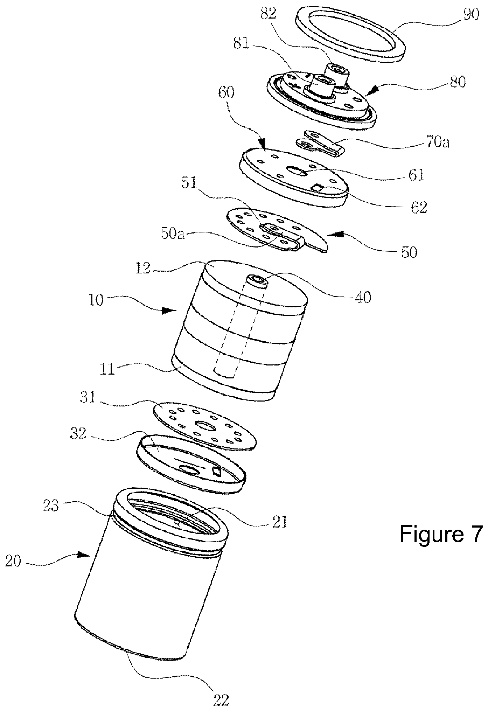

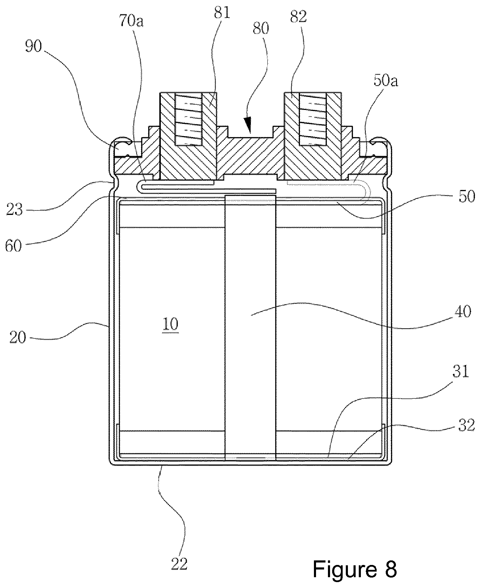

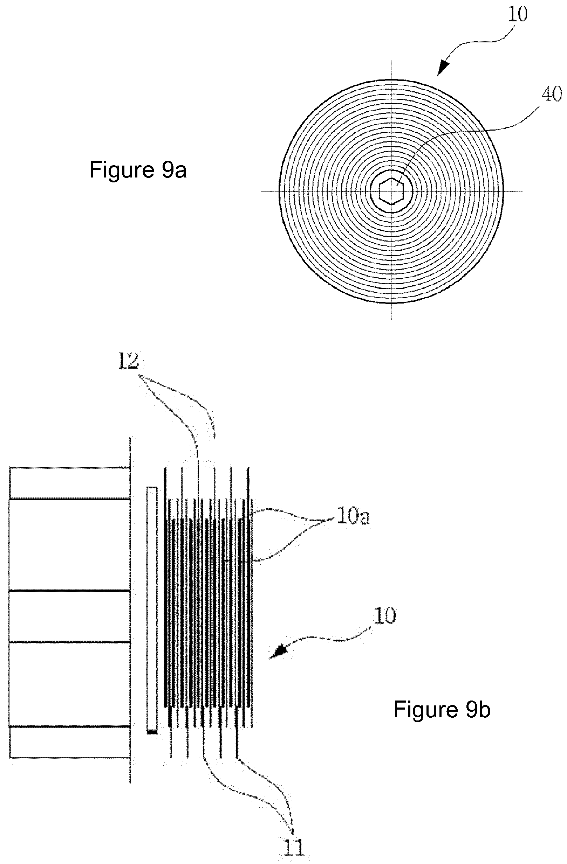

FIG. 7 is an exploded perspective view showing an electric double layer device according to Related Art Document 2, FIG. 8 is a sectional view showing the electric double layer device according to Related Art Document 2, FIG. 9A is a plan view showing a wound unit for the electric double layer device according to Related Art Document 2, and FIG. 9B is a half-sectional view showing the wound unit for the electric double layer device according to Related Art Document 2.

As shown in FIGS. 7 to 9B, the electric double layer device according to Related Art Document 2 includes a wound unit 10, which includes a first current collector 11 and a second current collector 12, which are wound while being separated from each other by a separator 10a, and a case 20 having an upper opening 21, through which the wound unit 10 is received, and a lower closure 22.

More specifically, as shown in FIGS. 7 to 9B, the electric double layer device according to Related Art Document 2 further includes a lower connection plate 31 connected to the first current collector 11 of the wound unit 10, a lower insulating plate 32 placed on the lower closure 22 while receiving the lower connection plate 31, a connection core 40 connected to the lower connection plate 31 while being exposed upward in a state in which the connection core 40 is upright along the center of the wound unit 10, one terminal 50a extending upward from an upper collecting plate 50 connected to the second current collector 12 of the wound unit 10, the upper collecting plate 50 having therein a center hole 51, through which the connection core 40 extends, an upper insulating plate 60 fitted on the upper collecting plate 50 excluding the one terminal 50a, the upper insulating plate 60 having therein a through hole 61, through which the connection core 40 extends, and the other terminal 70a connected to the upper end of the connection core 40, the other terminal 70a extending upward while being spaced apart from the one terminal 50a.

The connection core 40 is perpendicularly connected to the lower connection plate 31, which is connected to the first current collector 11, and then the other terminal 70a is connected to the connection core 40 and is withdrawn. The upper collecting plate 50 is connected to the second current collector 12, and then the one terminal 50a is withdrawn. The one terminal 50a and the other terminal 70a are withdrawn upward.

Furthermore, the wound unit 10 for the electric double layer device according to Related Art Document 2 includes a first current collector 11 and a second current collector 12, which are wound while being separated from each other by a separator 10a, a lower connection plate 31 connected to the first current collector 11, a connection core 40 connected to the lower connection plate 31 while being exposed upward in a state in which the connection core 40 is upright along the center of the first current collector 11 and the second current collector 12, which are wound while being separated from each other by the separator 10a, and one terminal 50a extending upward from an upper collecting plate 50 connected to the second current collector 12 of the wound unit 10, the upper collecting plate 50 having therein a center hole 51, through which the connection core 40 extends.

The one terminal 50a may extend upward from the upper collecting plate 50 and may then be bent. The other terminal 70a may be connected to the upper end of the connection core 40 such that the other terminal 70a is spaced apart from the one terminal 50a. In addition, the other terminal 70a may extend upward and may then be bent.

The lower connection plate 31 is connected to the first current collector 11 of the wound unit 10 in a state in which the connection core 40 is upright along the center of the first current collector 11, for example, such that a negative electrode of the first current collector 11 is withdrawn upward through the connection core 40.

The one terminal 50a is connected to the second current collector 12 of the wound unit 10 in a state in which the one terminal 50a extends upward from the upper collecting plate 50, which has therein the center hole 51 through which the connection core 40 extends, for example, such that a positive electrode of the second current collector 12 is withdrawn upward. The other terminal 70a is connected to the upper end of the connection core 40 while extending upward such that the other terminal 70a is spaced apart from the one terminal 50a.

At this time, the upper insulating plate 60 is fitted on the upper collecting plate 50 excluding the one terminal 50a such that the one terminal 50a is exposed outward.

The electric double layer device according to Related Art Document 2 may further include an upper nonconductive plate 80 fitted in the case 20 to cover the upper opening 21, the upper nonconductive plate 80 having a first connection terminal 81 and a second connection terminal 82 respectively connected to the other terminal 70a and the one terminal 50a.

In the electric double layer device according to Related Art Document 2, however, the connection between the other terminal 70a and the connection core 40 is frequently poor since the other terminal 70a is connected to the upper end of the connection core 40 while extending upward. In particular, a plurality of components, such as the connection core 40 and the other terminal 70a, is needed, which makes it difficult to perform assembly and connection. As a result, productivity and ease of assembly are considerably reduced. Furthermore, the connection core 40 increases the weight of the electric double layer device.

Related Art Document

Patent Document

EP 1 688 975 A1 relates to a capacitor which is described as being able to reduce resistances from an element assembly to terminals, to be able to reduce inductance, and to be able to reduce time for producing the element assembly even in a case where the terminal is provided only on one side of an outer casing.

    (Patent Document 1) Related Art Document 1 (10-2008-0044054: Module type electric double layer capacitor and method of manufacturing the same) (Patent Document 2) Related Art Document 2 (10-2013-0065485: Electric double layer device and wound unit for the same)

SUMMARY OF THE INVENTION

Therefore, the present invention has been made in view of the above problems, and it is an object of the present invention to provide an electric double layer device configured such that a lower terminal is directly withdrawn from a lower collecting plate in the same manner as the manner in which an upper terminal is directly withdrawn from an upper collecting plate, thereby improving productivity and ease of assembly, and in addition increasing connection force.

It is another object of the present invention to provide an electric double layer device configured such that a lower terminal is directly withdrawn from a lower collecting plate, thereby improving discharge efficiency during the discharge of high current while reducing internal equivalent resistance.

It is a further object of the present invention to provide an electric double layer device further including an upper insulating ring configured to enable a lower terminal to maintain a state in which a wound unit and a case are spaced apart from each other, thereby more securely insulating the lower terminal and, in addition, making it easier to insert the wound unit into the case.

In accordance with the present invention, the above and other objects can be accomplished by the provision of an electric double layer device according to claim 1.

BRIEF DESCRIPTION OF THE DRAWINGS

The above and other objects, features and other advantages of the present invention will be more clearly understood from the following detailed description taken in conjunction with the accompanying drawings, in which:

FIG. 1 is a schematic view showing the structure of a general electric double layer device;
FIG. 2 is a schematic view illustrating a principle whereby an electric double layer capacitor, applied to a general electric double layer device, is charged;
FIG. 3 is a circuit diagram illustrating a principle whereby the electric double layer capacitor applied to the general electric double layer device is charged and discharged;
FIG. 4 is a view showing a process of manufacturing an electric double layer capacitor according to Related Art Document 1;
FIG. 5 is a view illustrating a method of manufacturing an integrated electric double layer capacitor according to Related Art Document 1;
FIG. 6 is a view illustrating a process of manufacturing an electrode device that constitutes the electric double layer capacitor according to Related Art Document 1;
FIG. 7 is an exploded perspective view showing an electric double layer device according to Related Art Document 2;
FIG. 8 is a sectional view showing the electric double layer device according to Related Art Document 2;
FIG. 9A is a plan view showing a wound unit for the electric double layer device according to Related Art Document 2;
FIG. 9B is a half-sectional view showing the wound unit for the electric double layer device according to Related Art Document 2;
FIG. 10 is an exploded perspective view showing an electric double layer device according to the present invention;
FIGS. 11A to 11K are perspective views showing a process of assembling the electric double layer device according to the present invention;
FIG. 12 is a sectional view showing the electric double layer device according to the present invention;
FIG. 13A is a plan view showing a wound unit that is applied to the electric double layer device according to the present invention;
FIG. 13B is a half-sectional view showing the wound unit that is applied to the electric double layer device according to the present invention; and
FIG. 13C is a development view showing the wound unit that is applied to the electric double layer device according to the present invention.

DETAILED DESCRIPTION OF THE INVENTION

An exemplary embodiment of an electric double layer device according to the present invention will be described in detail with reference to the accompanying drawings. A plurality of embodiments may be provided. The objects, features, and advantages of the present invention will be more clearly understood from the following detailed description of the embodiment.

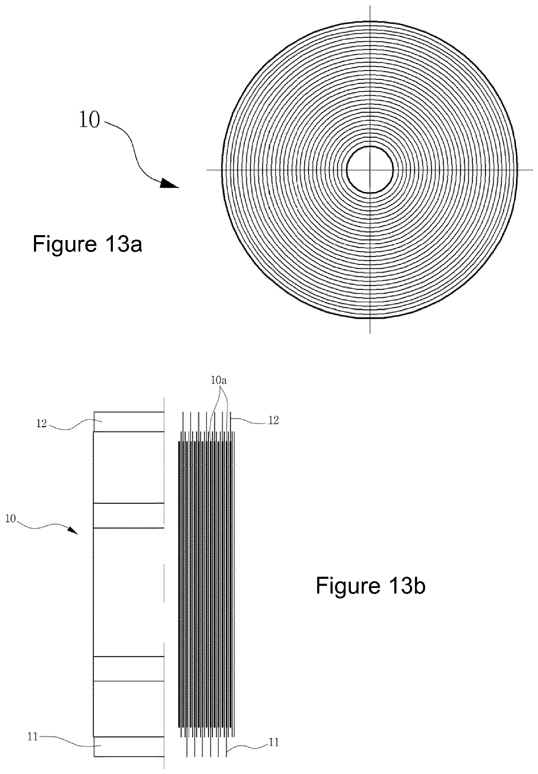

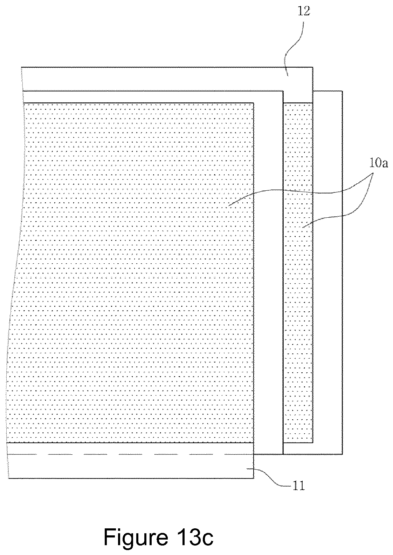

FIG. 13A is a plan view showing a wound unit that is applied to an electric double layer device according to the present invention, FIG. 13B is a half-sectional view showing the wound unit that is applied to the electric double layer device according to the present invention, and FIG. 13C is a development view showing the wound unit that is applied to the electric double layer device according to the present invention.

As shown in FIGS. 13A to 13B, a wound unit 10 that is applied to an electric double layer device according to the present invention is configured to have a structure in which a first current collector 11 and a second current collector 12 are wound such that the first current collector 11 extends downward and the second current collector 12 extends upward in a state in which a separator 10a is disposed between the first current collector 11 and the second current collector 12. For example, the first current collector 11 may be a negative electrode, and the second current collector 12 may be a positive electrode. Alternatively, the first current collector 11 may be a positive electrode, and the second current collector 12 may be a negative electrode.

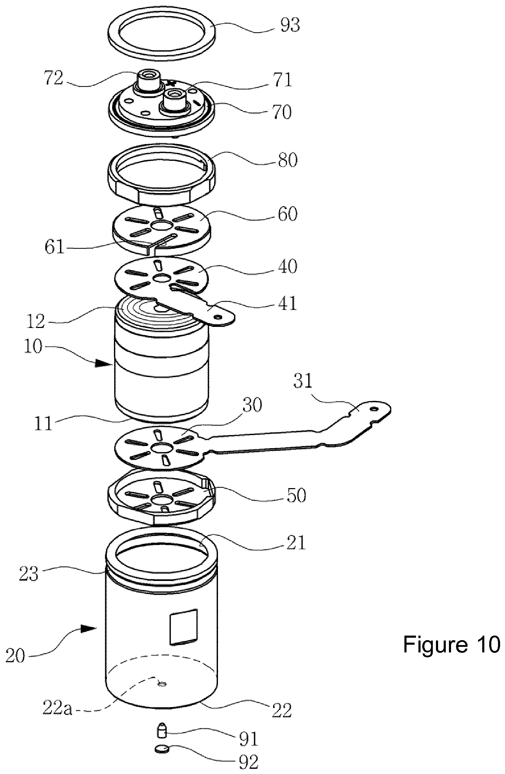

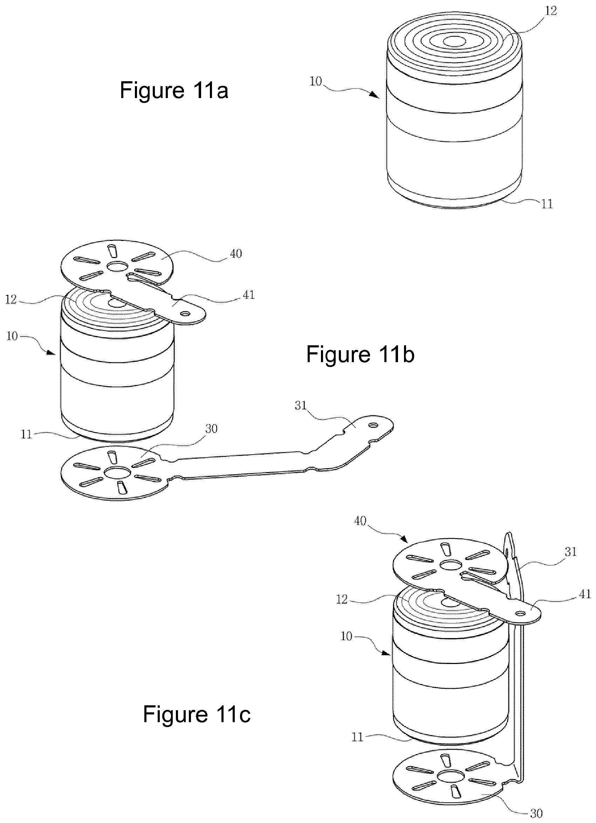

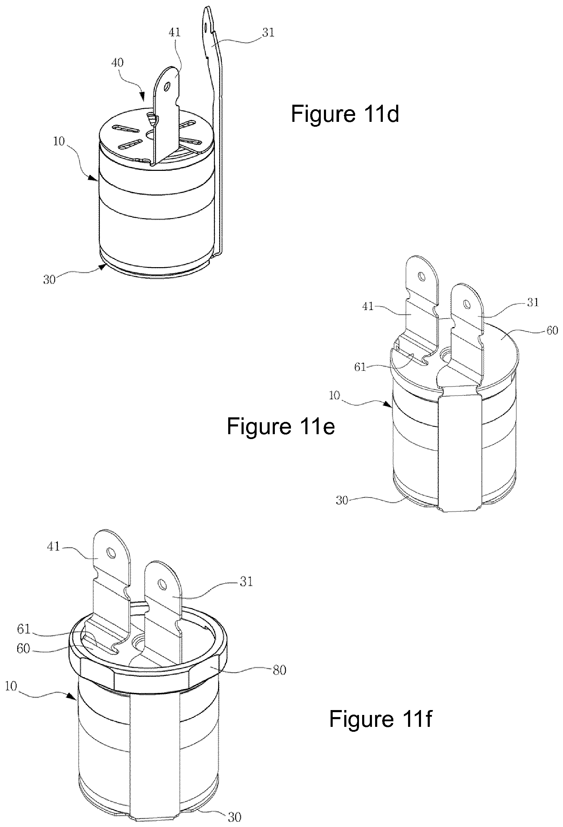

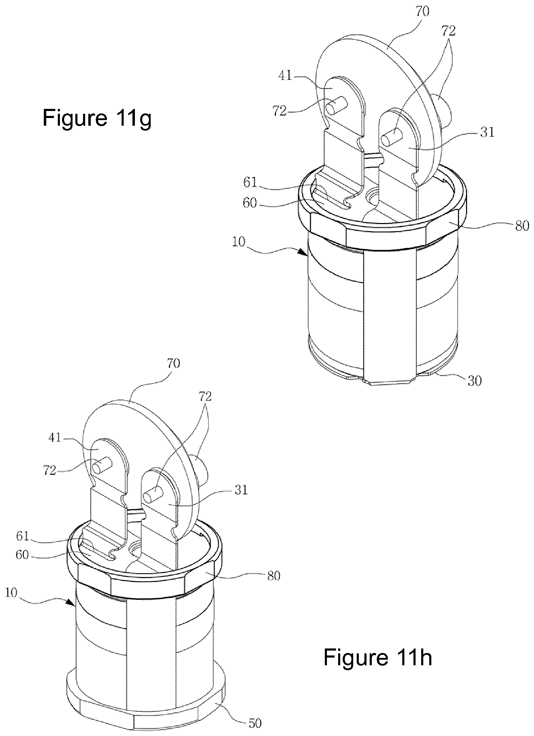

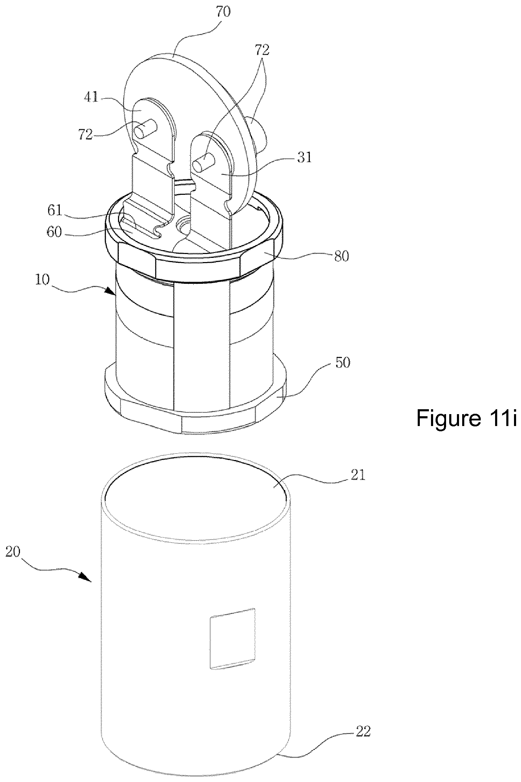

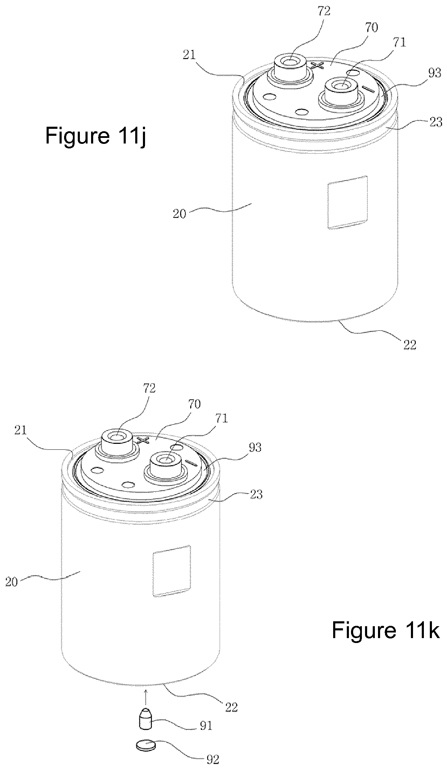

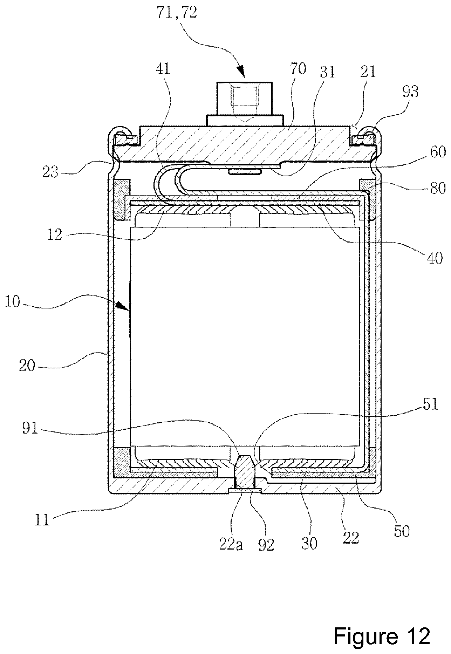

FIG. 10 is an exploded perspective view showing an electric double layer device according to the present invention, FIGS. 11A to 11K are perspective views showing a process of assembling the electric double layer device according to the present invention, and FIG. 12 is a sectional view showing the electric double layer device according to the present invention.

As shown in FIGS. 10 to 13C, the electric double layer device according to the present invention basically includes a wound unit 10, which includes a first current collector 11 and a second current collector 12, which are wound while being separated from each other by a separator 10a, and a case 20 having an upper opening 21, through which the wound unit 10 is received, and a lower closure 22.

More specifically, the electric double layer device according to the present invention further includes a lower collecting plate 30 connected to the first current collector 11 of the wound unit 10, the lower collecting plate 30 having a lower terminal 31 extending upward along the outer circumference of the wound unit 10, a lower insulating plate 50 placed on the lower closure 22 to receive the lower collecting plate 30, an upper collecting plate 40 connected to the second current collector 12 of the wound unit 10, the upper collecting plate 40 having an upper terminal 41 extending upward, an upper insulating plate 60 fitted on the upper collecting plate 40 such that the upper terminal 41 and the lower terminal 31 are directed upward, and an upper nonconductive plate 70 fitted in the case 20 to cover the upper opening 21, the upper nonconductive plate 70 having a first connection terminal 71 and a second connection terminal 72 respectively connected to the lower terminal 31 and the upper terminal 41.

The lower terminal 31 is withdrawn from the lower collecting plate 30, which is connected to the first current collector 11, and extends upward. As a result, components such as the connection core and the other terminal, disclosed in Related Art Document 2, are not needed. Consequently, it is possible to omit the process of connecting the connection core to the lower connection plate and the process of connecting the other terminal to the connection core, which are required in Related Art Document 2, thereby improving productivity and ease of assembly. In addition, the lower terminal 31 is withdrawn from the lower collecting plate 30 in the same manner as the manner in which the upper terminal 41 is withdrawn from the upper collecting plate 40, thereby preventing the risk of a poor connection therebetween. In particular, internal equivalent resistance is reduced, and discharge efficiency is improved during the discharge of high current.

In addition, the first connection terminal 71 and the second connection terminal 72 are more securely positioned by the upper nonconductive plate 70, thereby more smoothly achieving connection with an external apparatus.

Furthermore, the wound unit 10 for the electric double layer device according to the present invention includes a first current collector 11 and a second current collector 12, which are wound while being separated from each other by a separator 10a. More specifically, the lower terminal 31 extends upward along the outer circumference of the wound unit 10, is bent so as to be placed above the upper insulating plate 60, and is then bent upward so as to be connected to the first connection terminal 71. The upper insulating plate 60 has therein a through hole 61 through which the upper terminal 41 extends. The upper terminal 41 extends upward from the upper collecting plate 40, extends through the through hole 61, and is then bent so as to be connected to the second connection terminal 72.

That is, the lower terminal 31 and the upper terminal 41 are directly withdrawn respectively from the lower collecting plate 30 and the upper collecting plate 40 without welding, thereby improving productivity and ease of assembly and increasing electrical connection force.

The upper terminal 41 and the lower terminal 31 may be connected to an external apparatus, such as a cellular phone, a GPS receiver, or an MP3 player. Alternatively, the upper terminal 41 and the lower terminal 31 may be connected to a wind energy system, a solar energy system, or a motor of an electric vehicle or a hybrid electric vehicle.

In addition, the electric double layer device according to the present invention further includes an upper insulating ring 80, disposed so as to be in tight contact with the edge of the upper insulation plate 60 while receiving the lower terminal 31 therein to enable the lower terminal 31 to maintain a state in which the wound unit 10 and the case 20 are spaced apart from each other, thereby more securely insulating the lower terminal 31.

In particular, the wound unit 10 may be more easily inserted into the case 20, since the upper insulating ring 80 enables the lower terminal 31 to be disposed in tight contact with the edge of the upper insulation plate 60.

The electric double layer device according to the present invention further includes a first through hole 22a and a second through hole 51 formed respectively through the lower closure 22 of the case 20 and the lower insulating plate 50 so as to be used as introduction ports of an electrolytic solution, a rubber plug 91 fitted in the upper part of the first through hole 22a to seal the first through hole 22a, and a closure plug 92 fitted in the lower part of the first through hole 22a and welded to the lower part of the first through hole 22a. The closure plug 92 may be made of aluminum. In a state in which all parts, including the wound unit 10, are assembled in the case 20, therefore, an electrolytic solution is introduced into the case 20 via the first through hole 22a and the second through hole 51, and the first through hole 22a is sealed, thereby improving productivity and ease of assembly.

Meanwhile, the electric double layer device according to the present invention may further include curling rubber 93 placed on the edge of the upper nonconductive plate 70 to seal the upper opening 21 after curling of the case 20, thereby sealing the interior of the case 20.

In addition, the electric double layer device according to the present invention may further include a beading part 23 provided at the upper part of the case 20 to maximize firmness between the upper nonconductive plate 70, including the upper terminal 41 and the lower terminal 31, and the case 20.

As is apparent from the above description, according to the present invention, the lower terminal is directly withdrawn from the lower collecting plate in the same manner as the manner in which the upper terminal is directly withdrawn from the upper collecting plate, thereby improving productivity and ease of assembly, and in addition increasing connection force.

According to the present invention, the lower terminal is directly withdrawn from the lower collecting plate, thereby improving discharge efficiency during the discharge of high current while reducing internal equivalent resistance.

According to the present invention, the electric double layer device further includes an upper insulating ring, configured to enable the lower terminal to maintain a state in which the wound unit and the case are spaced apart from each other, thereby more securely achieving insulation of the lower terminal.

According to the present invention, the upper insulating ring enables the lower terminal to be disposed in tight contact with the edge of the upper insulation plate, whereby the wound unit is more easily inserted into the case.

According to the present invention, an electrolytic solution is introduced into the case via a first through hole and a second through hole in a state in which all parts, including the wound unit, are assembled in the case, thereby improving productivity and workability.

The present invention may be applied to the field of devices such as a battery, a capacitor, and an electrolytic condenser, which store electrical energy.

Although the preferred embodiments of the present invention have been disclosed for illustrative purposes, those skilled in the art will appreciate that various modifications, additions and substitutions are possible, without departing from the scope of the invention as disclosed in the accompanying claims.

**Claims**

1. An electric double layer device comprising:

   an electrode unit (10) comprising a first current collector (11) and a second current collector (12) wound and separated from each other by a separator (10a);
   a case (20) comprising an upper opening (21) through which the electrode unit (10) is received, and a lower closure (22);
   a lower collecting plate (30) connected to the first current collector (11), the lower collecting plate (30) having a lower terminal (31) extending toward the upper opening (21) along an outer circumference of the electrode unit (10), wherein the lower terminal (31) includes a bottom surface facing the electrode unit (10);
   a lower insulating plate (50) placed on the lower closure (22) of the case (20) to receive the lower collecting plate (30);
   an upper collecting plate (40) connected to the second current collector (12), the upper collecting plate (40) having an upper terminal (41) extending toward the upper opening (21);
   an upper insulating plate (60) placed over the upper collecting plate (40), wherein the upper insulating plate (60) includes a first surface facing the electrode unit (10) and a second surface facing the upper opening (21), wherein the first surface of the upper insulating plate (60) is in direct physical contact with the upper collecting plate (40), and wherein the second surface of the upper insulating plate (60) is in direct physical contact with the bottom surface of the lower terminal (31) of the lower collecting plate (30); and
   an upper nonconductive plate (70) fitted in the case (20) to cover the upper opening (21), the upper nonconductive plate (70) having a first connection terminal (71) and a second connection terminal (72) respectively connected to the lower terminal (31) and the upper terminal (41), wherein the lower terminal (31) extends toward the upper opening (21) along the outer circumference of the electrode unit (10), is bent so as to be placed above the upper insulating plate (60), and is then bent toward the upper opening (21) so as to be connected to the first connection terminal (71), wherein the upper insulating plate (60) has therein a through hole (61) through which the upper terminal (41) extends, and wherein the upper terminal (41) extends toward the upper opening (21) from the upper collecting plate (40), extends through the through hole (61), and is then bent so as to be connected to the second connection terminal (72).

2. The electric double layer device according to claim 1, further comprising an upper insulating ring (80), in physical contact with an edge of the upper insulation plate (60) and receiving the lower terminal (31) therein.

3. The electric double layer device according to any one of claims 1 or 2, further comprising:

a first through hole (22a) and a second through hole (51) formed respectively through the lower closure (22) of the case (20) and the lower insulating plate (50);
a rubber plug (91) fitted in an upper part of the first through hole (22a) to seal the first through hole (22a); and
a closure plug (92) fitted in and welded to a lower part of the first through hole (22a).

4. The electric double layer device according to claim 1, wherein the upper and lower terminals (41, 31) are respectively integrally formed with the upper and lower collecting plates (40, 30).

5. The electric double layer device according to claim 1, wherein the upper collecting plate (40) includes a body portion from which the upper terminal (41) extends, and wherein the body portion is covered by the first surface of the upper insulating plate (60).

6. The electric double layer device according to claim 5, wherein the upper terminal (41) passes through the through hole (61) so as to be exposed from the upper insulating plate (60).

7. The electric double layer device according to claim 1, further comprising an upper insulating ring (80) surrounding the upper insulating plate (60) and contacting a portion of the lower terminal (31) of the lower collecting plate (30).

8. The electric double layer device according to claim 1, wherein the upper and lower terminals (41, 31) of the upper and lower collecting plates (40, 30) respectively include first and second through-holes formed at their ends thereof and configured to respectively receive the first and second connection terminals (71, 72) to respectively connect the lower and upper terminals (31, 41) of the lower and upper collecting plates (30, 40) to the first and second connection terminals (71, 72).

9. The electric double layer device according to claim 1, wherein the lower terminal (31) includes a folded portion disposed between the electrode unit (10) and the upper opening (21) of the case (20).

10. The electric double layer device according to claim 9, wherein the folded portion includes an upper portion and a lower portion that overlap each other in a direction extending from the lower closure (22) to the upper opening (21).

**Patentansprüche**

1. Elektrische Doppelschichtvorrichtung, umfassend:

eine Elektrodeneinheit (10), die einen ersten Stromkollektor (11) und einen zweiten Stromkollektor (12) umfasst, die gewickelt und durch einen Separator (10a) voneinander getrennt sind;
ein Gehäuse (20), das eine obere Öffnung (21), durch die die Elektrodeneinheit (10) aufgenommen wird, und einen unteren Verschluss (22) umfasst;
eine untere Sammelplatte (30), die mit dem ersten Stromkollektor (11) verbunden ist, wobei die untere Sammelplatte (30) einen unteren Anschluss (31) aufweist, der sich in Richtung der oberen Öffnung (21) entlang eines Außenumfangs der Elektrodeneinheit (10) erstreckt, wobei der untere Anschluss (31) eine der Elektrodeneinheit (10) zugewandte Bodenfläche aufweist;
eine untere Isolierplatte (50), die auf dem unteren Verschluss (22) des Gehäuses (20) platziert ist, um die untere Sammelplatte (30) aufzunehmen;
eine obere Sammelplatte (40), die mit dem zweiten Stromkollektor (12) verbunden ist, wobei die obere Sammelplatte (40) einen oberen Anschluss (41) aufweist, der sich in Richtung der oberen Öffnung (21) erstreckt;
eine obere Isolierplatte (60), die über der oberen Sammelplatte (40) platziert ist, wobei die obere Isolierplatte (60) eine erste, der Elektrodeneinheit (10) zugewandte Oberfläche und eine zweite, der oberen Öffnung (21) zugewandte Oberfläche beinhaltet, wobei die erste Oberfläche der oberen Isolierplatte (60) in direktem physischen Kontakt mit der oberen Sammelplatte (40) steht und wobei die zweite Oberfläche der oberen Isolierplatte (60) in direktem physischen Kontakt mit der Bodenfläche des unteren Anschlusses (31) der unteren Sammelplatte (30) steht; und
eine obere nichtleitende Platte (70), die in das Gehäuse (20) eingepasst ist, um die obere Öffnung (21) abzudecken, wobei die obere nichtleitende Platte (70) einen ersten Verbindungsanschluss (71) und einen zweiten Verbindungsanschluss (72) aufweist, die jeweils mit dem unteren Anschluss (31) und dem oberen Anschluss (41) verbunden sind,
wobei sich der untere Anschluss (31) in Richtung der oberen Öffnung (21) entlang des Außenumfangs der Elektrodeneinheit (10) erstreckt, so gebogen wird, dass er über der oberen Isolierplatte (60) platziert wird, und dann in Richtung der oberen Öffnung (21) so gebogen wird, dass er mit dem ersten Verbindungsanschluss (71) verbunden wird, wobei die obere Isolierplatte (60) darin ein Durchgangsloch (61) aufweist, durch das sich der obere Anschluss (41) erstreckt, und wobei sich der obere Anschluss (41) von der oberen Sammelplatte (40) in Richtung der oberen Öffnung (21) erstreckt, sich durch das Durchgangsloch (61) erstreckt und dann so gebogen wird, dass er mit dem zweiten Verbindungsanschluss (72) verbunden wird.

2. Elektrische Doppelschichtvorrichtung nach Anspruch 1, ferner umfassend einen oberen Isolierring (80), der in physischem Kontakt mit einer Kante der oberen Isolierplatte (60) steht und darin den unteren Anschluss (31) aufnimmt.

3. Elektrische Doppelschichtvorrichtung nach einem der Ansprüche 1 oder 2, ferner umfassend:

     ein erstes Durchgangsloch (22a) und ein zweites Durchgangsloch (51), die jeweils durch den unteren Verschluss (22) des Gehäuses (20) und die untere Isolierplatte (50) gebildet sind;
     einen Gummistopfen (91), der in einen oberen Teil des ersten Durchgangslochs (22a) eingepasst ist, um das erste Durchgangsloch (22a) abzudichten; und
     einen Verschlussstopfen (92), der in einen unteren Teil des ersten Durchgangslochs (22a) eingepasst und daran verschweißt ist.

4. Elektrische Doppelschichtvorrichtung nach Anspruch 1, wobei der obere und untere Anschluss (41, 31) jeweils einstückig mit der oberen und unteren Sammelplatte (40, 30) ausgebildet sind.

5. Elektrische Doppelschichtvorrichtung nach Anspruch 1, wobei die obere Sammelplatte (40) einen Körperabschnitt beinhaltet, von dem sich der obere Anschluss (41) erstreckt, und wobei der Körperabschnitt von der ersten Oberfläche der oberen Isolierplatte (60) bedeckt ist.

6. Elektrische Doppelschichtvorrichtung nach Anspruch 5, wobei der obere Anschluss (41) durch das Durchgangsloch (61) so verläuft, dass er von der oberen Isolierplatte (60) freiliegt.

7. Elektrische Doppelschichtvorrichtung nach Anspruch 1, ferner umfassend einen oberen Isolierring (80), der die obere Isolierplatte (60) umgibt und einen Abschnitt des unteren Anschlusses (31) der unteren Sammelplatte (30) berührt.

8. Elektrische Doppelschichtvorrichtung nach Anspruch 1, wobei der obere und untere Anschluss (41, 31) der oberen und unteren Sammelplatte (40, 30) jeweils erste und zweite Durchgangslöcher beinhalten, die an ihren Enden davon ausgebildet sind und konfiguriert sind, um jeweils den ersten und zweiten Verbindungsanschluss (71, 72) aufnehmen, um jeweils den unteren und oberen Anschluss (31, 41) der unteren und oberen Sammelplatte (30, 40) mit dem ersten und zweiten Verbindungsanschluss (71, 72) zu verbinden.

9. Elektrische Doppelschichtvorrichtung nach Anspruch 1, wobei der untere Anschluss (31) einen gefalteten Abschnitt beinhaltet, der zwischen der Elektrodeneinheit (10) und der oberen Öffnung (21) des Gehäuses (20) angeordnet ist.

10. Elektrische Doppelschichtvorrichtung nach Anspruch 9, wobei der gefaltete Abschnitt einen oberen Abschnitt und einen unteren Abschnitt beinhaltet, die einander in einer Richtung überlappen, die sich vom unteren Verschluss (22) zur oberen Öffnung (21) erstreckt.

## Revendications

1. Dispositif électrique à double couche comprenant :

     une unité d'électrode (10) comprenant un premier collecteur de courant (11) et un second collecteur de courant (12) enroulés et séparés l'un de l'autre par un séparateur (10a) ;
     un boîtier (20) comprenant une ouverture supérieure (21) à travers laquelle l'unité d'électrode (10) est reçue, et une fermeture inférieure (22) ;
     une plaque collectrice inférieure (30) connectée au premier collecteur de courant (11), la plaque collectrice inférieure (30) ayant une borne inférieure (31) s'étendant vers l'ouverture supérieure (21) le long d'une circonférence externe de l'unité d'électrode (10), dans lequel la borne inférieure (31) comprend une surface inférieure faisant face à l'unité d'électrode (10) ;
     une plaque isolante inférieure (50) placée sur la fermeture inférieure (22) du boîtier (20) pour recevoir la plaque collectrice inférieure (30) ;
     une plaque collectrice supérieure (40) connectée au second collecteur de courant (12), la plaque collectrice supérieure (40) ayant une borne supérieure (41) s'étendant vers l'ouverture supérieure (21) ;
     une plaque isolante supérieure (60) placée sur la plaque collectrice supérieure (40), dans laquelle la plaque isolante supérieure (60) comprend une première surface faisant face à l'unité d'électrode (10) et une seconde surface faisant face à l'ouverture supérieure (21), dans lequel la première surface de la plaque isolante supérieure (60) est en contact physique direct avec la plaque collectrice supérieure (40), et dans lequel la seconde surface de la plaque isolante supérieure (60) est en contact physique direct avec la surface inférieure de la borne inférieure (31) de la plaque collectrice inférieure (30) ; et une plaque non conductrice supérieure (70) ajustée dans le boîtier (20) pour recouvrir l'ouverture supérieure (21), la plaque non conductrice supérieure (70) ayant une première borne de connexion (71) et une seconde borne de connexion (72) respectivement connectées à la borne inférieure (31) et à la borne supérieure (41),

dans lequel la borne inférieure (31) s'étend vers l'ouverture supérieure (21) le long de la circonférence externe de l'unité d'électrode (10), est inclinée de manière à être placée au-dessus de la plaque isolante supérieure (60), et est ensuite inclinée vers l'ouverture supérieure (21) de manière à être connectée à la première borne de connexion (71), dans lequel la plaque isolante supérieure (60) comporte dans celle-ci un trou traversant (61) à travers lequel s'étend la borne supérieure (41), et dans lequel la borne supérieure (41) s'étend vers l'ouverture supérieure (21) à partir de la plaque collectrice supérieure (40), s'étend à travers le trou traversant (61), et est ensuite inclinée de manière à être connectée à la seconde borne de connexion (72).

2.  Dispositif électrique à double couche selon la revendication 1, comprenant en outre une bague isolante supérieure (80), en contact physique avec un bord de la plaque isolante supérieure (60) et recevant la borne inférieure (31) dans celle-ci.

3.  Dispositif électrique à double couche selon l'une quelconque des revendications 1 ou 2, comprenant en outre :

    un premier trou traversant (22a) et un second trou traversant (51) formés respectivement à travers la fermeture inférieure (22) du boîtier (20) et la plaque isolante inférieure (50) ; un bouchon en caoutchouc (91) ajusté dans une partie supérieure du premier trou traversant (22a) pour sceller le premier trou traversant (22a) ; et un bouchon de fermeture (92) ajusté dans et soudé à une partie inférieure du premier trou traversant (22a).

4.  Dispositif électrique à double couche selon la revendication 1, dans lequel les bornes supérieure et inférieure (41, 31) sont respectivement formées d'un seul tenant avec les plaques collectrices supérieure et inférieure (40, 30).

5.  Dispositif électrique à double couche selon la revendication 1, dans lequel la plaque collectrice supérieure (40) comprend une partie de corps à partir de laquelle s'étend la borne supérieure (41), et dans lequel la partie de corps est recouverte par la première surface de la plaque isolante supérieure (60).

6.  Dispositif électrique à double couche selon la revendication 5, dans lequel la borne supérieure (41) passe à travers le trou traversant (61) de manière à être exposée depuis la plaque isolante supérieure (60).

7.  Dispositif électrique à double couche selon la revendication 1, comprenant en outre une bague isolante supérieure (80) entourant la plaque isolante supérieure (60) et venant au contact d'une partie de la borne inférieure (31) de la plaque collectrice inférieure (30).

8.  Dispositif électrique à double couche selon la revendication 1, dans lequel les bornes supérieure et inférieure (41, 31) des plaques collectrices supérieure et inférieure (40, 30) comprennent respectivement des premier et second trous traversants formés à leurs extrémités et configurés pour respectivement recevoir les première et seconde bornes de connexion (71, 72) pour connecter respectivement les bornes inférieure et supérieure (31, 41) des plaques collectrices inférieure et supérieure (30, 40) aux première et seconde bornes de connexion (71, 72).

9.  Dispositif électrique à double couche selon la revendication 1, dans lequel la borne inférieure (31) comprend une partie pliée disposée entre l'unité d'électrode (10) et l'ouverture supérieure (21) du boîtier (20).

10. Dispositif électrique à double couche selon la revendication 9, dans lequel la partie pliée comprend une partie supérieure et une partie inférieure qui se chevauchent dans une direction s'étendant de la fermeture inférieure (22) à l'ouverture supérieure (21).

Figure 1

Figure 2

Figure 3

Figure 4

Figure 5

Figure 6

Figure 7

Figure 8

Figure 9a

Figure 9b

93

72          71
             70

80

60
61

40
41
12
10
11                          31
                  30
50
21
23

20              22a          22
                             91
                             92

Figure 10

Figure 11a

Figure 11b

Figure 11c

Figure 11d

Figure 11e

Figure 11f

Figure 11g

Figure 11h

Figure 11i

Figure 11j

Figure 11k

Figure 12

10

Figure 13a

10a

12

12

10

Figure 13b

11

11

Figure 13c

**EP 3 196 906 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1688975 A1

- WO 1020130065485 A